# EUROPÄISCHE PATENTSCHRIFT

(11) **EP 3 250 380 B1**
(45) Veröffentlichungstag und Bekanntmachung des Hinweises auf die Patenterteilung: **15.01.2020**
(21) Anmeldenummer: 16701504.9
(22) Anmeldetag: 26.01.2016
(51) Int. Cl.: B32B 27/32, B32B 3/30, C08J 5/18, F04B 39/00, F04B 39/12

(54) **BEUTELVERPACKUNG**
BAG PACKAGING
EMBALLAGE EN SACHET

(30) Priorität: 29.01.2015 AT 500622015
(43) Veröffentlichungstag der Anmeldung: 06.12.2017
(73) Patentinhaber: Constantia Pirk GmbH & Co. KG, 92712 Pirk (DE)
(72) Erfinder: GREFENSTEIN, Achim, 67122 Altrip (DE); GEITNER, Werner, 92637 Weiden (DE); GEILLERSDÖRFER, Ingo, 92708 Mantel (DE)
(74) Vertreter: Patentanwälte Pinter & Weiss OG
(86) Internationale Anmeldenummer: PCT/EP2016/051512
(87) Internationale Veröffentlichungsnummer: WO 2016/120239

(56) Entgegenhaltungen:
- EP-A1- 2 149 447
- EP-A1- 2 799 234
- EP-A2- 1 340 694
- WO-A1-2006/096894
- FR-A1- 2 753 996
- FR-A1- 2 753 997
- JP-A- H0 524 158
- JP-A- 2003 181 962

## Beschreibung

Die gegenständliche Erfindung betrifft eine Beutelverpackung hergestellt aus einem Folienlaminat aus einer Trägerschicht und einer eine Siegelschicht ausbildenden Siegelfolie, wobei die Beutelverpackung durch Falten und Siegeln des Folienlaminats hergestellt ist, wodurch überlappende Siegelnähte entstehen.

Eine Siegelfolie für eine Siegelschicht wird beispielsweise durch Blasfolienextrusion oder Flachfolienextrusion hergestellt. Das Folienlaminat für die Herstellung des Beutels wird in der Regel durch Kaschieren (also Verbinden mittels der Klebeschicht) mehrerer Folien erzeugt. Bei der Herstellung von Siegelfolien aus geblasenem Polyethylen (PE) (Blasfolie) oder gegossenem Polypropylen (PP) (Castfolie) werden nach dem heutigen Stand der Technik sogenannte Slipadditive (Gleitmittel) oder Antiblockadditive zugegeben. Diese haben die Aufgabe, die meist recht stumpfen Polyolefine (wie PE oder PP) glatter zu machen, so dass diese in der Weiterverarbeitung besser über die Metalloberflächen der Verpackungsmaschinen oder gegen sich selbst gleiten können. Wird dies nicht gemacht, kann es zu unerwünschten Anlagenstillständen und/oder faltigen Siegelnähten bzw. undichten Verpackungen kommen.

Für die Verarbeitung solcher Folienlaminate in Verpackungsmaschinen werden typischerweise Reibkoeffizienten (COF=Coefficient of Friction) der Siegelschicht gegenüber Stahl im Bereich von 0,15 bis 0,30 und der Siegelschicht gegen sich selbst im Bereich von 0,2 bis 0,4 gefordert. Insbesondere bei der Verarbeitung der Folienlaminate zu Beuteln, sogenannten Flowpacks, in FFS-Anlagen (Form-fill-seal) ist der Reibkoeffizient gegen Stahl ein entscheidendes Qualitätsmerkmal eines Verpackungslaminates.

Die in der gegenständlichen Anmeldung angegebenen Reibkoeffizienten werden mit der folgenden Prüfvorschrift ermittelt:
Auf einen Prüfklotz der Dimension 66 x 60 x 16 mm und einem Gewicht von 500g wird auf einer Seite des Prüfklotzes (66 x 60 mm) ein Muster einer knitter- und faltenfreie Siegelfolie gespannt. Die zu prüfende Oberfläche der Folie muss dabei natürlich nach außen weisen. Das Muster der Folie kann zum Einspannen größer sein, als die Größe der Seite des Prüfklotzes. Der Prüfklotz wird zur Messung des Reibkoeffizienten gegen Stahl mit der Seite, auf der die Folie aufgespannt ist, auf einen Stahltisch gelegt. Der Prüfklotz wird dann über den Stahltisch gezogen und die dafür benötigte Kraft gemessen. Der Reibkoeffizient wird dann als Verhältnis der gemessenen Kraft und der Gewichtskraft des Prüfklotzes (500g) ermittelt.

Für die Messung des Reibkoeffizienten der Siegelschicht gegen sich selbst, wird genauso vorgegangen, nur wird auf den Prüftisch ebenso eine knitter- und faltenfreie Folie gespannt (mit der zu prüfenden Seite nach außen), auf der der Prüfklotz aufgelegt wird. Mit einer Zugprüfmaschine wird der Prüfklotz mit einer konstanten Geschwindigkeit von 150 mm/min über eine Messstrecke von 50 mm über den Untergrund gezogen und die Zugkraft gemessen.

Es wird dabei üblicherweise der sogenannte statische Reibkoeffizient, der sich aus der Maximalkraft ergibt, bevor sich der Prüfklotz bewegt, und der sogenannte dynamische Reibkoeffizient unterschieden. Letzterer ergibt sich aus der nahezu konstanten, mittleren Kraft während der konstanten, ruckfreien Bewegung des Prüfklotzes. Zu stumpfe Folien bewegen sich nur ruckartig und können somit nicht vermessen werden, da die Kräfte zu stark schwanken. Solche Folien sind in der Praxis unbrauchbar.

Um diese Reibkoeffizienten zu erreichen werden nach dem Stand der Technik in der Siegelfolie Slipadditivkonzentrationen mit einem S-Wert von 16.000 bis 25.000 verwendet. Der S-Wert ist dabei definiert als Produkt aus der Schichtdicke der Siegelfolie und dem Gehalt an Slipadditiv in ppm (parts per million).

Als Slipadditive werden üblicherweise Ölsäureamide oder mittlerweile bevorzugt Erucasäureamide (ESA) eingesetzt, die aus der Siegelfolie mit der Zeit nach außen wandern und sich auf der Oberfläche der Siegelfolie ablagern und dort als Gleitfilm wirken. Größter Nachteil dieser Produkte ist, dass diese Slipadditive migrieren, wodurch folgende Nachteile entstehen können:
- Die Gleitreibung der PE oder PP Siegelfolie verändert sich mit steigender Temperatur durch bessere Löslichkeit der Slipadditive im PE bzw. PP, wodurch sich die Verarbeitungsbedingungen eines Folienlaminats mit einer solchen Siegelfolie als Siegelschicht verändern. Das kann die Verarbeitung solcher Folienlaminate (in einer Verpackungsmaschine) oder solcher Siegelfolien (in einem Kaschierprozess) erheblich erschweren.
- Die Gleitreibung verändert sich nach dem Kaschieren des Folienlaminats durch Migration der Slipadditive aus der Siegelfolie in den Kleber und/oder Kaschierpartner, wodurch sich wiederum die Verarbeitungsbedingungen verändern können. Das kann die Verarbeitung solcher Folienlaminate erheblich erschweren.
- Der Kaschierpartner der Siegelfolie, z.B. PET oder BOPP, wird glatter durch die Aufnahme des Slipadditivs. Das kann dazu führen, dass das Folienlaminat nicht mehr in der Verpackungsanlage transportiert werden kann, wodurch eine Weiterverarbeitung unmöglich wäre.

Antiblockadditive sind meist mineralische Füllstoffe (beispielsweise Silikate oder Talkum), durch deren Zugabe die Oberflächenrauigkeit der Siegelfolie erhöht wird. Antiblockmittel neigen zwar nicht zur Migration, können jedoch alleine den Reibkoeffizienten (COF=Coefficient of Friction) der Siegelfolie, und damit die Gleiteigenschaften, nicht ausreichend herabsetzen. Während reines PE einen COF von 0,5 bis über 1 (komplettes Verblocken) hat, können mit Antiblockadditiven alleine minimale Reibkoeffizienten von 0,3 gegen Stahl erzeugt werden. Dies aber auch nur bei hoher Zugabekonzentration und reduzierter Transparenz der resultierenden Siegelfolie, was in der Regel unerwünscht ist. Zum Erreichen des gewünschten COF wurde daher die Zugabe von Slipadditiven für notwendig erachtet.

Bei der Herstellung von Verpackungen in Form von Beuteln wird oftmals ein Folienlaminat wie oben beschrieben zu einem Beutel gefaltet und verschweißt bzw. versiegelt. Die Folie ist dabei typischerweise ein mehrschichtiges Laminat, z.B. aus einer transparenten Außenschicht, wie z.B. aus BOPET (biaxial orientiertes Polyethylenterephthalat) oder BOPP (biaxial orientiertes Polypropylen), einer innenliegenden Siegelschicht aus einem siegelfähigem Polymer in Form einer Siegelfolie wie oben beschrieben, wie z.B. aus PE (Polyethylen) oder PP (Polypropylen), und einer optionalen dazwischenliegenden Barriereschicht, wie z.B. aus Aluminium oder metallisiertem Kunststoff (z.B. metallisiertes PET). Das Siegeln oder Schweißen erfolgt, wie hinlänglich bekannt ist, typischerweise zwischen temperierten Siegelbacken, die zusammengepresst werden, wodurch die Siegelschicht der Folie aufschmilzt und beim nachfolgenden Abkühlen die Verbindung herstellt. Siegelfähig bedeutet daher in diesem Zusammenhang, dass die Schmelztemperatur der Siegelschicht das Siegeln ermöglicht. Als Material für die Siegelschicht kommen verschiedenste Materialien zum Einsatz, die bei typischen Siegeltemperaturen über 100°C schmelz- und zusammenpressbar sein sollen. Diese Anforderung führt zu verschiedenen Mischungen und Co-Extrudaten von LDPE (low density Polyethylen), LLDPE (linear low density Polyethylen), EVA (Ethylenvinylacetat) und ähnlichen Materialien. Durch das Falten der Folie kommt es im Überlappungsbereich aber zu unterschiedlichen Materialdicken, was beim Siegeln zu unvollständigen Siegelnähten führen kann, womit der erzeugte Beutel z.B. unerwünschte Luftkanäle ausbildet.

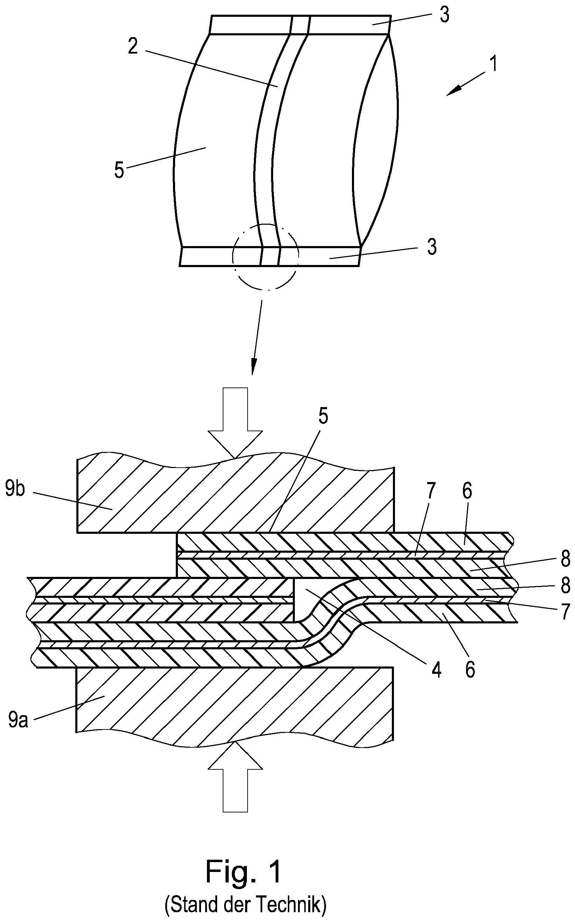

Das ist in Fig.1 am Beispiel eines Beutels 1, hier ein vertikaler Schlauchbeutel, schematisch dargestellt. Die Folie des Beutels 1 wird hier zuerst der Länge nach zu einem Schlauch zusammengefaltet und entlang der Längsnaht 2 versiegelt. Am oberen und unteren Ende des Beutels 1 wird der Schlauch zur Bildung eines Beutels 1 mit jeweils einer Quernaht 3 versiegelt, wodurch das darin befindliche Füllgut im Beutel 1 eingeschlossen ist. Der Überlappungsbereich der beiden Siegelnähte, also zwischen Längsnaht 2 und Quernaht 3, ist in Fig.1 vergrößert dargestellt. Aufgrund der unterschiedlichen Materialstärken entlang der Quernaht 3 kann es passieren, dass die überlappende Folie 5, insbesondere im Bereich überlappender Siegelnähte, durch die Siegelbacken 9a, 9b nicht gänzlich zusammengepresst werden kann, wodurch es beim Siegeln der Quernaht 3 in diesem Bereich zur Ausbildung eines Luftkanals 4 kommen kann, wodurch der Beutel undicht ist. Die Folie 5 ist hier als dreischichtiges Laminat mit einer äußeren BOPET-Schicht 6, einer Zwischenschicht 7 aus Aluminium und einer inneren Siegelschicht 8 aus PP ausgeführt. Ähnliche Probleme treten auch bei anderen Beuteltypen, wie beispielsweise Kreuzbodenbeutel, Standbeutel, Blockbodenbeutel, usw., im Überlappungsbereich mehrerer Folienschichten auf.

Ähnliche Probleme können beim Siegeln von sogenannten folienartigen Platinen (in der Regel aus einer Aluminium Basisschicht und einer darauf aufgebrachten Siegelschicht) auf dem Rand von Kunststoffbehältern auftreten, wie z.B. bei Jogurt Verpackungen üblich. Solche folienartigen Platinen sind in der Regel aus Aluminium, Kunststoff oder Papier, auf das eine Siegelschicht aufgebracht wird, ausgeführt. Aufgrund von Fertigungstoleranzen bei der Herstellung der Kunststoffbehälter und/oder bei der Herstellung der Folienlaminate der Platinen kann es auch hier zu Dickenunterschieden kommen, die beim Siegeln durch den Druck der Siegelbacken nicht ausgeglichen werden können, was zu Undichtheit der Verpackung führen kann.

Um dieses Problem beim Siegeln zu reduzieren wurden bereits spezielle Materialen für die Verwendung als Siegelschicht entwickelt, die jedoch relativ teuer sind und daher in der Verpackungsindustrie zögerlich eingesetzt werden.

Die Dicke der Siegelschicht kann dabei nicht reduziert werden, da die Siegelschicht eine gewisse Kompressibilität aufweisen muss. Um die Siegelschicht dünner machen zu können, werden dem Material der Siegelschicht oftmals spezielle Polymere zugemischt, die das Material aber ebenfalls wieder verteuern.

In der EP 2 537 770 A1 wird ein Folienmaterial mit einer geschäumten Polymerschicht beschrieben, insbesondere zur Herstellung von Beutel für körniges Stückgut. Durch die geschäumte Polymerschicht soll erreicht werden, dass sich das körnige Stückgut nicht an der äußeren Beuteloberfläche abzeichnet.

Die US 2011/0293204 A1 beschreibt eine geschäumte, kompressible Polymerschicht als Siegelschicht, um die Siegeleigenschaften zu verbessern.

Die US 2005/0247960 A1 wiederum beschreibt eine Folie mit einer geprägten Siegelschicht zur Ausbildung eines Beutels zum Vakuumverpacken, wobei durch die Prägung Spalte ausgebildet werden, die beim Vakuumverpacken Luftkanäle ausbilden, durch die Luft besser abgesaugt werden kann. Als Prägung kann ein sichtbares Muster, z.B. in Form von Buchstaben oder einer beliebigen Form, vorgesehen sein. Damit die Prägung mit freiem Auge gut sichtbar ist und um die Funktion als Luftkanal bei der Vakuumverpackung sicher zu stellen, muss die Prägung relativ tief, in der Regel wesentlich tiefer als 100µm, ausgeführt sein. Die ausgebildeten Luftkanäle müssen >∼1 mm breit sein, damit ein vernünftiger Volumenstrom zum Absaugen der Luft aus der Verpackung realisiert werden kann.

Geprägte Siegelschichten werden auch verwendet, um zu verhindern, dass beim Übereinanderstapeln von Deckelplatinen diese aneinander haften, was zu Problemen bei der Verarbeitung in Verarbeitungsmaschinen nach sich ziehen kann. Durch die Prägung wird zwischen einzelnen aneinander liegenden Deckelplatinen ein Luftpolster geschaffen, wodurch sich die Deckelplatinen einfach und sicher vereinzeln lassen. Beispiele dafür finden sich in der EP 2 149 447 A1 oder der WO 2006/096894 A1.

Die JP H05 24158 A beschreibt ein Verpackungslaminat aus einer Siegelschicht und einer Trägerschicht, wobei in die Siegelschicht kein Slipadditiv zugesetzt wird und an der Siegelschicht zur Reduzierung des COF des Verpackungslaminats gegen sich selbst Oberflächenstrukturen vorgesehen sind. Auch die JP 2003 181 962 A, die FR 2 753 996 A1 und die FR 2 753 997 A1 beschreiben Verpackungslaminate mit Oberflächenstrukturen zur Reduzierung des COF.

Es ist nun eine Aufgabe der gegenständlichen Erfindung eine durch Falten und Siegeln eines Folienlaminat mit einer Siegelfolie hergestellte Beutelverpackung anzugeben, wobei die Probleme bei Siegeln im Überlappungsbereich mehrerer Folienschichten reduziert werden können.

Diese Aufgabe wird erfindungsgemäß dadurch gelöst, in dem die Siegelfolie aus einem siegelfähigen Polymer mit einer Schichtdicke im Bereich von 10µm bis 100µm hergestellt ist, wobei auf einer ersten Seite der Siegelfolie zumindest an den Stellen an denen gesiegelt wird Oberflächenstrukturen eingearbeitet sind, wobei die größte Dicke der Siegelfolie um zumindest 10% größer ist, als die kleinste Dicke der Siegelfolie und die größte seitliche Erstreckung der Oberflächenstrukturen kleiner als 500 µm ist und der Siegelfolie ein Slipadditiv in einer Menge zugesetzt ist, die einen S-Wert von kleiner 10.000, bevorzugt kleiner 5.000, besonders bevorzugt frei von jeglichen migrierenden Slipaditiven, ergibt und auf einer ersten Seite der Siegelfolie die Oberflächenstrukturen ausgebildet sind und eine gegenüberliegende zweite Seite der Siegelfolie mit der Trägerschicht des Folienlaminats verbunden ist und beim Siegeln aneinander liegende Folienlaminate mit der Siegelfolie, insbesondere im Überlappungsbereich mehrerer Siegelnähte, zusammengepresst und komprimiert werden, um die Ausbildung von Luftkanälen im Überlappungsbereich zu vermeiden.

Durch die Oberflächenstrukturen wird einerseits die Kompressibilität der Siegelfolie erhöht, was es ermöglicht, auftretende Dickenunterschiede im Siegelbereich besser auszugleichen. Außerdem kann die benötigte Materialmenge der Siegelfolie reduziert werden, da durch die Oberflächenstrukturen die mittlere Dicke der Siegelfolie verringert wird. Andererseits wurde aber auch festgestellt, dass durch die Oberflächenstrukturen mit weniger oder gar keinen Slipadditiven gleichzeitig auch ein COF erreicht werden kann, der für die Verarbeitung der Siegelfolie günstig ist. Durch die Oberflächenstrukturen lassen sich damit mit einer einzigen Maßnahme zwei an sich voneinander unabhängige Zielsetzungen verwirklichen.

Es wurde insbesondere überraschender Weise zusätzlich festgestellt, dass eine erfindungsgemäße Siegelfolie auch ohne bzw. mit wenig Slipadditiv einen ausreichend niedrigen COF aufweist, um in Verpackungsmaschinen weiterverarbeitet werden zu können. Damit kann bei einem erfindungsgemäßen Folienlaminat auf solche Slipadditive in der Siegelschicht verzichtet werden, oder die notwendige Menge zumindest deutlich reduziert werden, womit auch die eingangs erwähnten Nachteile und Probleme mit solchen Additiven vermieden, oder zumindest verringert, werden können.

Aus fertigungstechnischen Restriktionen kann die größte Dicke einer geprägten Kunststofffolie (die Siegelfolie) derzeit nicht beliebig hoch sein. Aufgrund der Fließfähigkeit von Kunststoffen und der derzeitigen Notwendigkeit, mit gekühlten Prägewalzen zu arbeiten, auf denen der Kunststoff erstarrt, liegt die technologische Obergrenze für die größte Dicke derzeit bei ca. 300% der kleinsten Dicke. Solange dies nicht zu optischen Beeinträchtigungen der Oberfläche führt, können im Rahmen der Erfindung aber auch größeren Dickenunterschiede zum Einsatz kommen, insbesondere, wenn die kleinste Dicke in punktförmigen Vertiefungen gemessen wird.

Der COF einer erfindungsgemäß geprägten Siegelfolie gegen sich selbst kann insbesondere dann deutlich reduziert werden, wenn die Prägestrukturen (typischerweise Pyramiden) diagonal zur Längsrichtung der Siegelfolie angeordnet sind, wobei die Längsrichtung der Bewegungsrichtung der Siegelfolie in der Verpackungsmaschine entspricht.

Die Oberflächenstrukturen sind vorteilhaft als aus der ersten Seite herausragende Strukturen ausgebildet.

Ganz besonders vorteilhaft ist es jedoch, wenn die Oberflächenstrukturen als Vertiefungen an der ersten Seite ausgebildet, da dann der COF der Siegelfolie sowohl gegen Stahl, als auch gegen sich selbst, nur durch die Oberflächenstrukturen ausreichend abgesenkt werden kann.

Gleichfalls ist es besonders vorteilhaft, wenn die Oberflächenstrukturen mit einer hexagonalen Grundfläche ausgebildet sind, da auch dann der COF der Siegelfolie sowohl gegen Stahl, als auch gegen sich selbst, nur durch die Oberflächenstrukturen ausreichend abgesenkt werden kann.

Die Oberflächenstrukturen sind dabei auch so klein, dass sie mit freiem Auge nicht störend wahrgenommen werden, wodurch die Siegelfolie auch in einem Folienlaminat mit einer eine Siegelschicht ausbildenden Siegelfolie und einer damit verbundenen Trägerschicht verwendet werden kann. Damit wird die mit freiem Auge wahrnehmbare Erscheinung eines Folienlaminates mit einer solchen Siegelfolie nicht negativ beeinträchtigt.

Für bestimmte Anwendungen des Folienlaminats ist es vorteilhaft, wenn die Trägerschicht eine Basisschicht und eine Barriereschicht umfasst, wobei die Barriereschicht zwischen Basisschicht und Siegelschicht angeordnet ist.

Wenn die Siegelfolie eine im Flachfolienextrusionsverfahren hergestellte PE-Folie ist, verbessert sich die Siegelfähigkeit durch den gegenüber einer geblasenen PE-Folie höheren MFI noch weiter.

Das erfindungsgemäße Folienlaminat wird ganz besonders vorteilhaft für eine durch Falten und Siegeln des Folienlaminats hergestellte Verpackung und zum Verschließen eines Behälters mittels Aufsiegeln einer Platine aus dem Folienlaminat auf einem Rand des Behälters verwendet.

Die gegenständliche Erfindung wird nachfolgend unter Bezugnahme auf die Figuren 1 bis 10 näher erläutert, die beispielhaft, schematisch und nicht einschränkend vorteilhafte Ausgestaltungen der Erfindung zeigen. Dabei zeigt
Fig.1 einen Verpackungsbeutel nach dem Stand der Technik,
Fig. 2 bis 7 eine erfindungsgemäße Siegelfolie mit Oberflächenstrukturen,
Fig.8 einen Mikrotomschnitt durch eine erfindungsgemäße Siegelfolie,
Fig.9 ein Folienlaminat mit einer erfindungsgemäßen Siegelfolie und
Fig.10 die Verwendung des erfindungsgemäßen Folienlaminats als Verschluss eines Behälters.

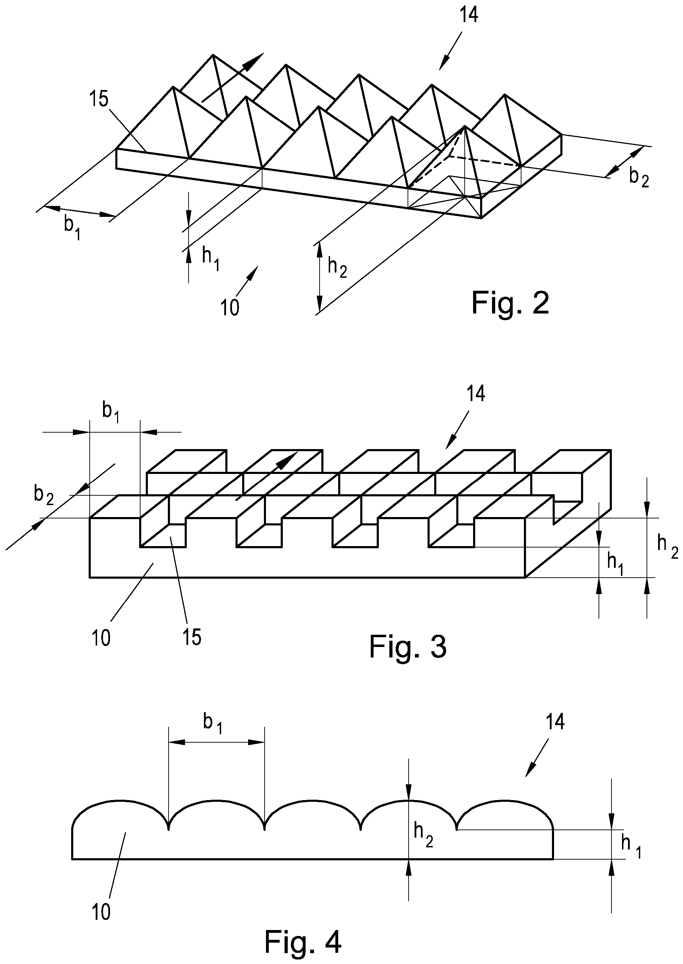

Fig.2 zeigt eine erfindungsgemäße Siegelfolie 10, beispielsweise für die Verwendung als siegelfähige Siegelschicht auf einem Folienlaminat zur Herstellung von Verpackungen, z.B. Beuteln oder Verschlüssen von Behältern (sogenannten Platinen). Die Siegelfolie 10 ist vorzugsweise ein Polyolefin, wie z.B. Polyethylen (PE) oder Polypropylen (PP) in den verschiedenen verfügbaren Ausgestaltungen, beispielsweise als LDPE (low density Polyethylen) oder LLDPE (linear low density Polyethylen), oder eine Mischung mit einem solchen Polyolefine. Oftmals werden als Siegelfolien 10 Mischungen aus einem Polyolefin mit einem Plastomer, einem Polyolefin mit einer besonders niedrigen Dichte kleiner 0,9 kg/dm³, eingesetzt.

Die Siegelfolie 10 hat an einer ersten Seite 15 Oberflächenstrukturen 14 eingeformt, z.B. eingeprägt. In der Fig.2 sind die nebeneinander angeordneten Oberflächenstrukturen 14 quer zur Längsrichtung (angedeutet durch den Pfeil) der Siegelfolie 10 angeordnet. Die Siegelfolie 10 hat durch die Oberflächenstrukturen 14 eine Schichtdicke, die zwischen einer kleinsten Dicke h₁ und einer größten Dicke h₂ variiert. Als Schichtdicke der Siegelfolie 10 wird hier die mittlere Dicke zwischen kleinster Dicke h₁ und einer größten Dicke h₂ verstanden. Die Oberflächenstrukturen 14 haben seitliche Erstreckungen b₁, b₂ in der sich flächig erstreckenden Ebene der Siegelfolie 10.

Die Oberflächenstrukturen 14 können dabei unterschiedlichst ausgeführt sein, beispielsweise pyramidenförmig wie in Fig.2, oder auch quaderförmig wie in Fig.3 angedeutet oder kuppelförmig wie in Fig.4 angedeutet. Die Pyramiden der Ausführung nach Fig.2 müssen dabei keine quadratische oder rechteckförmige Grundfläche haben, sondern die Grundfläche kann im Prinzip beliebig ausgestaltet sein.

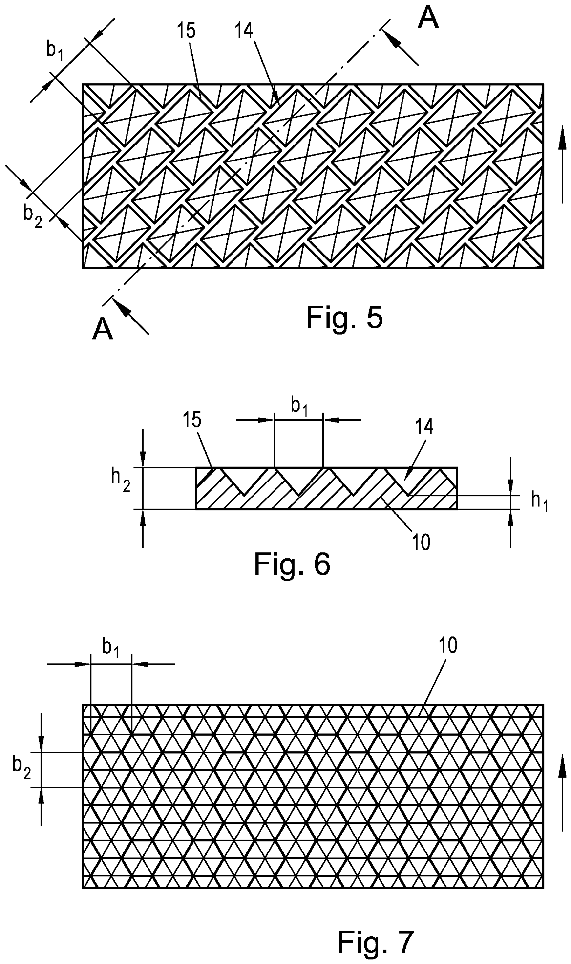

In den Beispielen der Fig.2 bis 4 stehen die Oberflächenstrukturen 14 aus der Ebene bzw. aus der ersten Seite 15 der Siegelfolie 10 hervor. Es sind aber auch Oberflächenstrukturen 14 möglich, die als Vertiefungen in der Siegelfolie 10 ausgeführt sind, beispielsweise als versenkte Pyramiden, wie in Fig.5 in einer Draufsicht und in Fig.6 in einem Schnitt A-A angedeutet. Dabei ist die Spitze der Pyramide ausgehend von der ersten Seite 15 vertieft. Auch hier kann die Grundfläche der versenkten Pyramiden im Prinzip beliebig gestaltet sein. Im Ausführungsbeispiel nach Fig.5 erkennt man weiters, dass die nebeneinander liegenden Oberflächenstrukturen 14 diagonal zur Längsrichtung (angedeutet durch den Pfeil) der Siegelfolie 10 ausgerichtet sind.

Bei einer hexagonalen Grundfläche, wie in Fig.7 dargestellt, egal ob als versenkte Strukturen oder als sich aus der Ebene erhebende Strukturen, ergeben sich besonders vorteilhafte Eigenschaften der Siegelfolie 10, wie weiter unten noch ausgeführt ist.

Auch andere Formen der Oberflächenstrukturen 14 als die in den Figuren 2 bis 7 dargestellten sind natürlich denkbar.

Die Oberflächenstrukturen 14 können durch ein beliebiges geeignetes Verfahren eingebracht werden, z.B. durch Prägen der Siegelfolie 10 mittels Prägewalzen nach der Blasfolienextrusion oder Flachfolienextrusion (off-line Verfahren). Die Herstellung der Oberflächenstrukturen 14 kann auch in-line, unter Nutzung der Schmelzwärme der Folienherstellung erfolgen.

Entscheidend für die angestrebten Eigenschaften der erfindungsgemäßen Siegelfolie 10 sind die Dimensionen der Oberflächenstrukturen 14. Dafür muss die größte Dicke h₂ der Siegelfolie 10 um mindestens 10% größer sein als die kleinste Dicke h₁ der Siegelfolie 10, da ansonsten nicht genügend Material bei überlappenden Siegelnähten verdrängt werden kann. Aus praktischen Gründen bzw. fertigungstechnischen Einschränkungen ist es vorteilhaft, wenn die größte Dicke h₂ maximal 300% größer als die kleinste Dicke h₁ der Siegelfolie 10 ist. Insbesondere soll die Oberflächenstruktur 14 der Siegelfolie 10 für das freie Auge nicht sichtbar sein, sondern sich allenfalls in einer höheren Mattigkeit einer homogenen Oberfläche der Siegelfolie 10 äußern.

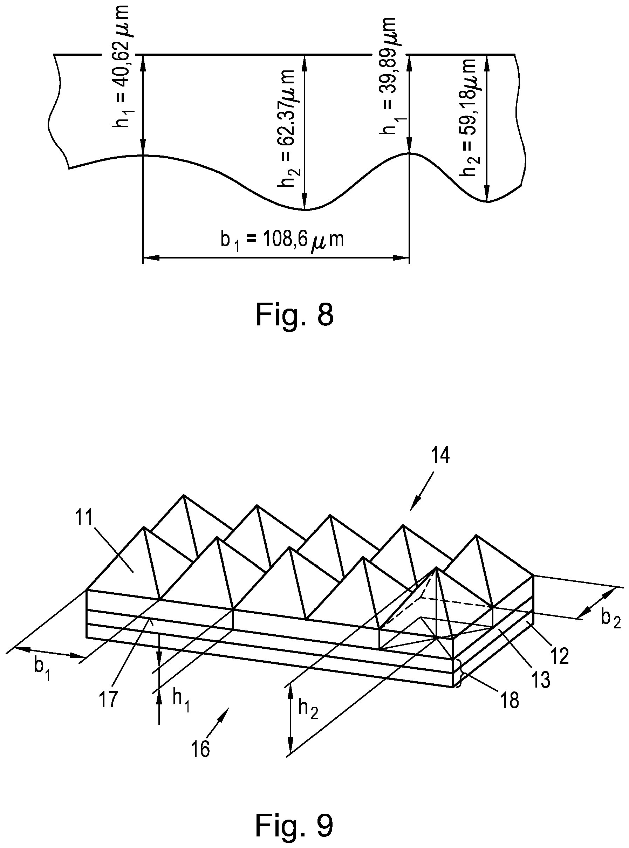

Diese Dicken h₁, h₂ können in der Praxis mit dem hinlänglich bekannten Verfahren der Mikrotomie ermittelt werden. Dabei werden Dünnschnitte (Mikrotomschnitte) eines Ausschnitts der Siegelfolie 10 angefertigt, die dann mikroskopisch untersucht werden. In Fig.8 ist schematisch ein Mikrotomschnitt durch eine erfindungsgemäße Siegelfolie 10 dargestellt. Die Oberflächenstrukturen 14 sind in den Figuren 2 bis 7 idealisiert dargestellt. In der Praxis kann es natürlich, allein schon aufgrund der Probenpräparation bzw. dadurch, dass ein solcher Schnitt niemals exakt parallel zu den geometrischen Strukturen vorgenommen wird, vorkommen, dass die gewünschten Strukturen nicht ideal in der Siegelfolie 10 abgebildet werden, wie in Fig.8 angedeutet. Einzelne Elemente der Oberflächenstrukturen 14 in der Siegelfolie 10 müssen auch nicht unmittelbar aneinandergrenzen, wie z.B. in Fig.3 oder Fig. 5 angedeutet.

Die größte Dicke h₂ des Ausschnitts der Siegelfolie 10 in Fig.8 ist hier 62,37 µm und die kleinste Dicke h₁ 39.89 µm, womit die größte Dicke h₂ um 56.4% größer ist als die kleinste Dicke h₁. Es könnte aber auch aus den am Ausschnitt messbaren maximalen und/oder minimalen Dicken ein Mittelwert ermittelt werden und daraus das Verhältnis der beiden Dicken zueinander bestimmt werden. Im Beispiel nach Fig.8 wäre die mittlere größte Dicke h₂ₘ = 60.78 µm ((62,37 + 59,18)/2), womit die mittlere größte Dicke h₂ um 52.4% größer ist als die kleinste Dicke h₁. Gleichfalls könnte natürlich auch die mittlere kleinste Dicke h₁ₘ ermittelt werden und damit das Verhältnis der Dicken berechnet werden, z.B. das Verhältnis der beiden mittleren Dicken. Vorzugsweise kann der kleinste Wert der verschiedenen Ermittlungsmethoden als Basis herangezogen werden.

Ebenso müssen die größten seitlichen Erstreckungen b₁, b₂ in der Fläche der Siegelfolie 10 kleiner sein als 500 µm, vorzugsweise kleiner als 400 µm und ganz besonders vorteilhaft kleiner als 250 µm, damit die Oberflächenstrukturen 14 mit dem freien Auge nicht sichtbar sind. Im Beispiel nach Fig.8 ist die größte seitliche Erstreckung b₁=108,6 µm. Ebenso könnte auch aus mehreren gemessenen größten seitlichen Erstreckungen ein Mittelwert gebildet werden, der dann kleiner als 500 µm sein muss. Für die seitlichen Erstreckungen sind Mikrotomschnitte in den Ebenen notwendig, in denen die größten Erstreckungen liegen, um die größten seitlichen Erstreckungen b₁, b₂ ermitteln zu können. Die größte seitliche Erstreckung kann aber einfacher auch aus einer mikroskopischen Draufsicht auf die Oberflächenstrukturen 14 der Siegelfolie 10 (wie in Fig.5 oder Fig.7) ermittelt werden.

Nachdem die Siegelfolie 10 gleichmäßig geprägt ist, reicht es an sich aus, einen kleinen geprägten Bereich der Siegelfolie 10, z.B. zwei oder drei nebeneinander liegende Oberflächenstrukturen 14, mittels Mikrotomschnitte zu untersuchen. Ein solcher Bereich wird als repräsentativ für die ganze Siegelfolie 10 mit Oberflächenstrukturen 14 angesehen.

Ebenso ist es denkbar, dass von der Siegelfolie 10 mehrere Mikrotomschnitte angefertigt werden und dass die Dicken oder die seitlichen Erstreckungen für jeden einzelnen Mikrotomschnitt wie oben beschrieben ermittelt werden. Daraus können dann Mittelwerte über alle Mikrotomschnitte berechnet werden, die dann als kleinste Dicke, größte Dicke und größte seitliche Erstreckung verwendet werden.

Die Begrenzung der größten seitlichen Erstreckung ist wichtig, um beim Siegeln keine Lufteinschlüsse und Undichtigkeiten zu erzielen und vor allem, um keine optisch störende, durch die Oberflächenstrukturen 14 verursachte Orangenhaut auf der meist hochglänzenden Sichtseite der Siegelfolie 10 zu erzeugen. Die Oberflächenstrukturen 14 sollen so klein sein, dass diese für das freie Auge keine störenden optischen Effekte verursachen.

Wenn die größte Dicke h₂ der Siegelfolie 10 um zumindest 10% größer ist, als die kleinste Dicke h₁ der Siegelfolie 10 (gegebenenfalls deren Mittelwerte) und die größte seitliche Erstreckung (b₁, b₂) der Oberflächenstrukturen 14 (gegebenenfalls deren Mittelwerte) kleiner als 500 µm ist, sind die Oberflächenstrukturen 14 bei der typischen Schichtdicke der Siegelfolie 10 im Bereich von 10µm bis 100µm mit freiem Auge nicht sichtbar, sondern nur unter dem Mikroskop bzw. Vergrößerungsglas erkennbar. Die Oberflächenstrukturen 14 äußern sich für das freie Auge nur durch ein mattes, satiniertes Aussehen der geprägten Oberfläche der Siegelfolie 10.

Der Effekt der Oberflächenstrukturen 14 beim Siegeln liegt darin, dass die Siegelfolie 10 gegenüber einer herkömmlichen im Wesentlichen glatten Siegelfolie 10 eine erhöhte Kompressibilität aufweist, die es ermöglicht, allfällige auftretenden Dickenunterschiede beim Siegeln besser auszugleichen. Gleichzeitig kann dadurch die benötigte Materialmenge für die Siegelfolie 10 verringert werden, da die mittlere Dicke der Siegelfolie 10 mit Oberflächenstrukturen kleiner ist, als eine herkömmliche glatte Siegelfolie.

Durch die Oberflächenstrukturen 14 der Siegelfolie 10 kann aber gleichzeitig erreicht werden, dass weniger Slipadditiv, oder sogar gar kein Slipadditiv, zugesetzt werden muss, um einen bestimmten vorteilhaften Reibungskoeffizienten (COF) der Siegelfolie 10 zu erzielen. Aufgrund der eingangs genannten negativen Eigenschaften der Slipadditive stellt das einen ganz besonderen Vorteil der Oberflächenstrukturen 14 dar. Hierbei wurde festgestellt, dass der S-Wert für die Siegelfolie 10 kleiner als 10.000 sein sollte, um die Nachteile zumindest ausreichend zu reduzieren. Ganz besonders vorteilhaft ist es aber, wenn die zugesetzte Menge an Slipadditiv Null ist, also in der Siegelfolie 10 überhaupt kein Slipadditiv enthalten ist.

Der Einfluss der Oberflächenstrukturen 14 auf den COF wird anhand der nachfolgenden Tabellen 1 und 2 erläutert.

**Tabelle 1**

| **Nr.** | **Material** | **Dicke** | **Prägung** | **Slipadditiv** | **COF Stahl stat./dyn.** | **COF Siegelfolie stat./dyn.** |
|---|---|---|---|---|---|---|
| 1 | LLDPE C8 | 70 µm | Nein | 500 ppm | 0,21/0,18 | 0,32/0,25 |
| 2 | LLDPE C8 | 70 µm | Nein | Kein | Nicht messbar | Nicht messbar |
| 3 | LLDPE C8 | 70 µm | Pyramide diagonal, quadratische Grundfläche, Diagonale Pyramide 185 µm, seitliche Erstreckung b₁/b₂=130 µm, h₁= 55µm, h₂= 85µm | Kein | 0,25/0,17 | 0,93/0,83 |
| 4 | LLDPE C4 | 50 g/m² | Pyramide, hexagonale Grundfläche, seitliche Erstreckung b₁= 120 µm, h₁=40 µm, h₂=60 µm | Kein | 0,20/0,18 | 0,38/0,35 |
| 5 | LDPE / LLDPE | 50 g/m² | Versenkte Pyramiden, quadratische Grundfläche, Diagonale Pyramide 220 µm, seitliche Erstreckung b₁/b₂=150 µm, h₁=42µm, h₂=58µm | Kein | 0,25/0,24 | 0,34/0,35 |

Die Siegelfolie Nr. 1 ist eine herkömmliche Siegelfolie aus LLDPE C8 mit einer Dicke von 70 µm mit keinen Oberflächenstrukturen 14 und mit ESA (Erucasäureamid) als Slipadditiv in einer Menge von 500ppm, was einen S-Wert von 35.000 ergibt. Damit kann ein COF gegenüber Stahl und gegenüber sich selbst erreicht werden, wie er für die Verarbeitung der Siegelfolie günstig ist.

Das Vergleichsbeispiel in Form der Siegelfolie Nr. 2 demonstriert, den Einfluss des Slipadditivs auf den COF, wenn keine Oberflächenstrukturen 14 eingeprägt sind. Hier ist der COF mit der obigen Prüfvorschrift nicht mehr messbar. Der COF ist bei einer solchen Siegelfolie so hoch, dass der Prüfklotz beim Messen des COF springen würde, was eine Messung unmöglich macht.

Die Siegelfolie Nr. 3 ist ebenfalls ohne Slipadditiv hergestellt, was einen S-Wert von 0 ergibt, dafür aber mit erfindungsgemäßen Oberflächenstrukturen 14 versehen. Die angegebene Dicke von 70 µm (entspricht ungefähr einem Flächengewicht von 65 g/m²) ist die Ausgangsdicke vor dem Prägen der Oberflächenstrukturen 14. Die Oberflächenstrukturen 14 sind hier als aus der Ebene herausstehende Pyramiden mit quadratischer Grundfläche mit einer Seitenlänge von 130 µm ausgeführt. Die Pyramiden sind dabei diagonal zur Längsrichtung der Siegelfolie 10 aufgebracht (wie in Fig.5). Hier erkennt man, dass der COF gegenüber Stahl durch die Oberflächenstrukturen 14 im gewünschten Bereich fällt, obwohl keine Slipadditive zugesetzt sind. Der COF der Siegelfolie 10 gegen sich selbst (letzte Spalte) ist hierbei noch außerhalb des für eine Verarbeitung günstigen Bereichs. Der Grund dafür wird darin gesehen, dass die abstehenden Pyramiden beim gegeneinander Abgleiten miteinander verzahnen können, was den COF erhöht.

Die Siegelfolie Nr. 4 mit einem Flächengewicht von 50 g/m² (entspricht einer Dicke vor dem Prägen von ungefähr 40-60 µm) hat eine andere Oberflächenstruktur 14. Diese ist hier als abstehende Pyramiden mit einer hexagonalen Grundfläche und einer Breite b₁ von 120 µm (siehe Fig.7) ausgeführt, wobei die Pyramiden diagonal zur Längsrichtung der Siegelfolie ausgerichtet sind (wie in Fig.7). Mit solchen Oberflächenstrukturen 14 erreicht man auch einen COF der Siegelfolie 10 gegen sich selbst, der für eine weitere Verarbeitung günstig ist. Eine hexagonale Oberflächenstrukturen 14 kann daher als besonders vorteilhaft angesehen werden. Hier wird angenommen, dass das obige Verzahnen durch die hexagonalen Strukturen weitestgehend verhindert wird, egal ob die Strukturen quer oder diagonal ausgerichtet sind.

In der Siegelfolie Nr.5 sind als Oberflächenstrukturen 14 versenkte Pyramiden (gemäß Fig.5 und 6) eingeprägt. Die Pyramiden sind mit quadratischer Grundfläche mit einer Seitenlänge b₁/b₂ von 150 µm ausgeführt und diagonal zur Längsrichtung der Siegelfolie 10 aufgebracht (wie in Fig.5 dargestellt). Mit solchen Oberflächenstrukturen 14 erreicht man ebenfalls einen COF der Siegelfolie 10 gegen Stahl und gegen sich selbst, der für eine weitere Verarbeitung günstig ist. Der Grund dafür wird darin gesehen, dass bei einer versenkten Oberflächenstrukturen 14 keine abstehenden Strukturen vorhanden sind, die beim Abgleiten gegeneinander verzahnen können. Eine versenkte Oberflächenstruktur 14 kann daher auch als besonders vorteilhaft angesehen werden, egal ob die Strukturen quer oder diagonal ausgerichtet sind.

In der Tabelle 2 ist ein weiteres Vergleichsbeispiel für eine Siegelfolie 10 aus einem anderen Polyolefin, hier ein mLLDPE (Metallocene LLDPE), enthalten.

**Tabelle 2**

| **Nr.** | **Material** | **Dicke** | **Prägung** | **Slipadditiv** | **COF Stahl stat./dyn.** | **COF Siegelfolie stat./dyn.** |
|---|---|---|---|---|---|---|
| 1 | mLLDPE | 60 g/m² | Pyramide diagonal, quadratische Grundfläche, Diagonale Pyramide 185 µm, seitliche Erstreckung b₁/b₂=130 µm, h₁=50 µm, h₂=80µm | Kein | 0,32/0,26 | Nicht messbar |
| 2 | mLLDPE | 60 g/m² | Pyramide diagonal, quadratische Grundfläche, Diagonale Pyramide 185 µm, seitliche Erstreckung b₁/b₂=130 µm, h₁=50 µm, h₂=80µm | Ja 800ppm | 0,30/0,24 | 0,35/0,32 |

Aus dem Vergleichsbeispiel nach Tabelle 2 erkennt man den Einfluss der Oberflächenstrukturen 14 auf den COF bei identischen geprägten Siegelfolien mit und ohne Slipadditiv. Gegenüber Stahl hat das an sich sehr klebrige mLLDPE auch ohne Slipadditiv annähernd den gleichen COF. Gegen sich selbst ist diese Art der Oberflächenstrukturen 14 aufgrund der "Verzahnung" der Pyramiden nicht messbar. Eine Folie aus gleichem Material ohne Oberflächenstrukturen 14 wäre aber selbst gegen Stahl nicht mehr messbar. Solche Folien werden in der industriellen Anwendung oft auch als selbstklebende Oberflächenschutzfolien eingesetzt.

Die erfindungsgemäße Siegelfolie 10 wird vorzugsweise in einem Folienlaminat 16, bestehend aus einer, üblicherweise bedruckten, Basisschicht 12 aus Aluminium, Papier oder Kunststoff und einer siegelfähigen Siegelschicht 11 aus der Siegelfolie 10, z.B. wie in Fig.9 dargestellt, verwendet. Dazu ist die der ersten Seite 15 der Siegelfolie 10 mit den Oberflächenstrukturen 14 abgewandte zweite Seite 17 der Siegelfolie 10 mit einer Trägerschicht 18 zum Folienlaminat 16 verbunden. Die Siegelschicht 11 bildet natürlich eine der äußeren Seiten des Folienlaminats 16. Die Trägerschicht 18 kann einschichtig, beispielsweise in Form einer Basisschicht 12, oder mehrschichtig, beispielsweise als Verbund aus einer Basisschicht 12 und einer Barriereschicht 13, sein. Als Basisschicht 12 kann Papier, Aluminium oder ein Kunststoff verwendet werden. Die Barriereschicht 13 ist z.B. eine Aluminiumfolie oder eine metallisierte Folie. Die einzelnen Schichten des Folienlaminats 16 sind jeweils z.B. mittels je einer nicht dargestellten Klebeschicht durch Kaschieren miteinander verbunden.

Für Anwendung des Folienlaminats 16 als Verpackung ist die Schichtdicke der Basisschicht 12 typischerweise im Bereich von 8µm bis 100 µm, beispielsweise 8 µm bis 40 µm bei BOPET oder 15 µm bis 40 µm bei Aluminium, 10µm bis 50 µm bei BOPP und bis zu 100 µm bei Papier. Die Schichtdicke der Siegelschicht 11 liegt typischerweise im Bereich von 10µm bis 100µm, vorzugsweise im Bereich von 10 µm bis 80 µm und ganz besonders vorteilhaft im Bereich von 20 µm bis 70 µm, und die Schichtdicke der Barriereschicht 13 typischerweise im Bereich von 6µm bis 25 µm bei Aluminium oder analog der oben genannten Dicken für die Basisschicht 12 bei metallisierten Polymerfolien. Es ist aber auch denkbar, dass die Barriereschicht 13 in der Siegelschicht 11 eingearbeitet ist, z.B. in Form einer PE-EVOH Folie (Polyethylen-Ethylen-Vinylalkohol-Copolymer-Folie), womit eine eigene Barriereschicht 13 entfallen kann. Die Schichtdicken allfälliger dazwischen angeordneter Klebeschichten liegt typischerweise im Bereich von 1µm bis 5µm. Die Trägerschicht 18 kann aber auch noch andere Schichten enthalten. Ebenso kann vorgesehen sein, die Trägerschicht 18 an der sichtbaren Seite zu bedrucken. Im Falle einer transparenten Basisschicht 12 in der Trägerschicht 18 kann auch die an die Basisschicht 12 angrenzende Schicht bedruckt sein.

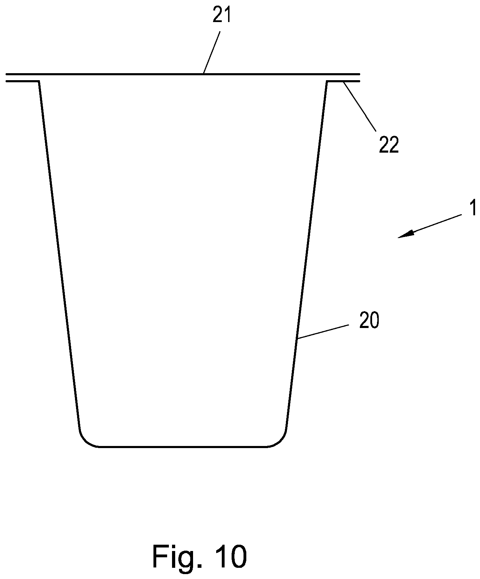

Ein solches Folienlaminat 16 wird für die Herstellung von Verpackungen für Lebensmittel, Tierfutter oder Hygieneartikel verwendet, z.B. in Form von Beuteln 1 oder als membranartige Verschlüsse (Platine 21) von Behältern (Fig.10). Beispielsweise wird das Folienlaminat 16 zur gewünschten Verpackung gefaltet und entlang von Siegelnähten gesiegelt, wie z.B. in Fig.1 anhand eines Beutels 1 dargestellt. Das Folienlaminat 16 kann auch in geeigneter Form ausgestanzt werden und als Platine 21 zum Verschluss eines Behälters 20 dienen, wie in Fig.10 dargestellt. Dazu wird die Platine 21 auf einem umlaufenden Rand 22 des Behälters 20 aufgesiegelt. Hierzu sind zur Herstellung solcher Verpackung jeweils kommerziell erhältliche Verpackungsmaschinen verfügbar, die das leisten, weshalb hier nicht näher auf den Vorgang der Herstellung solcher Verpackungen eingegangen wird. Die Siegelschicht 11 des Folienlaminats 10 weist zumindest an den Stellen, an denen gesiegelt wird die oben beschriebenen Oberflächenstrukturen 14 auf, wodurch durch den damit erreichten COF die günstige Verarbeitbarkeit des Folienlaminats 16 in der jeweiligen Verpackungsmaschine sichergestellt ist.

Bei vielen Anwendungen, wie FFS-Maschinen, ist darauf zu achten, dass der überwiegende Flächenanteil erfindungsgemäß mit den Oberflächenstrukturen 14 versehen ist, da ansonsten das problemlose Gleiten gegenüber den Stahloberflächen der Maschine nicht gegeben ist. Einzelne ungeprägte Bereiche, z.B. zur Gestaltung von Kundenlogos, sind aber machbar. Durch die Oberflächenstrukturen 14 ergibt sich aber auch eine verbesserte Kompressibilität des Folienlaminats 16, wodurch der Siegelvorgang auch an Überlappungsstellen mehrerer Siegelnähte 2, 3 (wie in Fig.1 beispielhaft beschrieben) unterstützt wird. Auch fertigungstechnisch bedingte Dickenunterschiede im Siegelbereich, können so ausgeglichen werden. Dadurch können beim Siegeln zwischen Siegelbacken 9a, 9b aneinander liegende und zusammengepresste Folienlaminate 16 besser komprimiert werden, wodurch die Ausbildung von Luftkanälen 4 im Überlappungsbereich bzw. von Undichtheiten im Siegelbereich zumindest reduziert, idealerweise verhindert werden kann. Gleichzeitig wird durch das erfindungsgemäße Folienlaminat 16 sichergestellt, dass die Optik der Verpackung, insbesondere auf der Sichtseite der Verpackung, nicht verschlechtert wird, da die Oberflächenstrukturen 14 ausreichend klein sind, um mit dem freien Auge nicht störend wahrgenommen zu werden. Aufgrund der kleinen Dimensionen der Oberflächenstrukturen 14 der der Siegelschicht 11 (insbesondere der Dicken) drücken sich diese auch nicht auf die Sichtseite des Folienlaminats 16, also die Außenseite der Verpackung, durch.

Da solche geprägten Folien der Siegelschicht 11 aus z.B. PE auch durch Flachfolienextrusion herstellbar sind, was derzeit nur für glatte Folien aus PP der Fall ist, können auch PE-Rohstoffe mit höherem MFI (Melt Flow Index) eingesetzt werden. Durch die bessere Fließfähigkeit des Folienmaterials 16 kann das Schließen der Luftkanäle beim Siegeln bzw. das Verhindern von Undichtheiten an der Siegelnaht zusätzlich unterstützt werden.

Der Effekt der erfindungsgemäßen Siegelfolie 10 in einem Folienlaminat 16 beim Siegeln wird anhand eines Beispiels in Form von Beuteln 1 erläutert. Hierzu wurden mit einer kommerziell erhältlichen Verpackungsmaschine, hier eine sogenannte Vertical Form Fill Seal Machine (vertical FFS), mit einem Folienlaminat A und einem Folienlaminat B Beutel, wie in Fig.1 dargestellt, erzeugt und anschließend die Dichtheit der derart hergestellten Beutel geprüft. Dabei wurde die Siegeltemperatur T_{Q} der Siegelung der Quernaht 3 und die Siegelzeit tₛ variiert, um für jede Siegeltemperatur T_{Q} die minimale Siegelzeit tₛ für die höchste Produktivität, als Anzahl A der produzierten Beutel pro Minute, zu ermitteln. Die Siegelzeit tₛ beeinflusst die Zykluszeit t_{z}, also die Zeit, die für die Herstellung eines Beutels benötigt wird. Die Siegeltemperatur für die Längsnaht 2 wurde dabei gleich bei 160°C belassen. Es wurden für jeden Parametersatz jeweils 30 Packungen hergestellt und auf Dichtheit geprüft. Die Prüfung auf Dichtheit erfolgte in einem Wasserbad bei einem Unterdruck von 650 mbar. Dabei sind die Beutel unter Wasser und die Luft oberhalb des Wassers wird auf den Unterdruck evakuiert. Dadurch bläht sich die in den Beuteln eingeschlossene Restluft auf und bringt im Schadensfall die Siegelnaht zum Versagen, was anhand entstehender Luftblasen im Wasser sichtbar ist.

Als Folienlaminat A wird ein herkömmliches Laminat mit einer Basisschicht 12 aus BOPET mit einer Schichtdicke von 12 µm und einer damit verklebten Siegelschicht 11 mit einem gewöhnlichen, durch Blasfolienextrusion hergestellten, hauptsächlich aus LDPE bestehenden glatten PE-Film mit einer Schichtdicke von 60 µm, einem Flächengewicht von 55g/m² und einer Schmelztemperatur von 113°C verwendet. Die mit 400 ppm ESA als Slipadditiv (S-Wert 24.000) und 2000 ppm Antiblockmittel ausgerüstete Siegelfolie 10 der Siegelschicht 11 hat einen COF (statisch/dynamisch) von 0,34/0,27 gegen sich selbst und von 0,20/0,16 gegen Stahl. Der statische COF betrifft den COF bei fehlender Relativbewegung und der dynamische COF den COF bei einer Relativbewegung.

Als Folienlaminat B wird ein Laminat mit einer Basisschicht 12 aus BOPET mit einer Schichtdicke von 12 µm und einer damit verklebten erfindungsgemäßen, kommerziell als Folie für Medical- und Hygieneanwendungen erhältlichen und geprägten Siegelschicht 11 mit Oberflächenstrukturen 14 verwendet. Die Oberflächenstrukturen 14 sind hier als Prägestrukturen in Form von aus der Oberfläche herausragenden hexagonalen Strukturen (Tabelle 1, Siegelfolie Nr.4) ausgeführt. Als Siegelschicht 11 wird eine Siegelfolie in Form eines hauptsächlich aus billigerem LLDPE Buten C4 bestehenden PE-Filmes mit einer mittleren Schichtdicke von 51,31 µm und einem Flächengewicht von 50g/m² und einer Schmelztemperatur von 121°C verwendet. Diese Siegelschicht 11 hat aufgrund der Oberflächenstrukturen 14 auch ohne jegliche Slipadditive wie ESA und Antiblockadditive einen COF (statisch/dynamisch) von 0,38/0,35 gegen sich selbst und von 0,20/0,18 gegen Stahl. Damit liegt das erfindungsgemäße Folienlaminat mit dem COF exakt im für die Weiterverarbeitung solcher Folien auf gängigen Verpackungsmaschinen gewünschten Bereich. Auch während der folgenden Versuche bei der Verarbeitung auf einer Verpackungsmaschine in Form einer vertikalen Form-Fill-Seal (vFFS) Anlage wurden als Bestätigung keine diesbezüglichen Probleme in der Verarbeitung beobachtet.

Das Ergebnis ist in Tabelle 3 dargestellt.

**Tabelle 3**

| | | | | **Folienlaminat A (Vergleich)** | **Folienlaminat B (Erfindung)** |
|---|---|---|---|---|---|
| **tₛ [s]** | **t_{z} [s]** | **A** | **t_{Q} [°C]** | **Dichte Pack** | **Dichte Pack** |
| 0,30 | 0,55 | 109 | 150°C | 60% | 83% |
| 0,25 | 0,5 | 120 | 160°C | 90% | 97% |
| 0,20 | 0,45 | 133 | 165°C | 23% | 97% |
| 0,25 | 0,5 | 120 | 165°C | 100% | 100% |
| 0,20 | 0,45 | 133 | 170°C | 23% | 97% |

Wie der Tabelle 3 zu entnehmen ist, kann die Siegelzeit tₛ mit einem erfindungsgemäßen Folienlaminat B verkürzt werden, was sich unmittelbar auch auf die Anzahl A der pro Minute herstellbaren Beutel niederschlägt. Dies wird mit einem preiswerten Rohstoff und einer geringeren Materialmenge erreicht. Dies ist umso bemerkenswerter, als die Folienrezeptur der Siegelschicht 11 noch in keiner Weise optimiert wurde. Der Effekt kommt nur durch die verbesserte Kompressibilität durch die Oberflächenstrukturen 14 in der Siegelschicht 11 zu Stande.

## Patentansprüche

1. Beutelverpackung hergestellt aus einem Folienlaminat (16) aus einer Trägerschicht (18) und einer eine Siegelschicht (11) ausbildenden Siegelfolie (10), wobei die Beutelverpackung durch Falten und Siegeln des Folienlaminats (16) hergestellt ist, wodurch überlappende Siegelnähte (2, 3) entstehen, **dadurch gekennzeichnet, dass** die Siegelfolie (10) aus einem siegelfähigen Polymer mit einer Schichtdicke im Bereich von 10µm bis 100µm, vorzugsweise 10 µm bis 80 µm und ganz besonders vorzugsweise im Bereich von 20 µm bis 70 µm hergestellt ist, wobei auf einer ersten Seite (15) der Siegelfolie (10) zumindest an den Stellen an denen gesiegelt wird Oberflächenstrukturen (14) eingearbeitet sind, wobei die größte Dicke (h₂) der Siegelfolie (10) um zumindest 10% größer ist, als die kleinste Dicke (h₁) der Siegelfolie (10) und die größte seitliche Erstreckung (b₁, b₂) der Oberflächenstrukturen (14) kleiner als 500 µm ist und der Siegelfolie (10) ein Slipadditiv in einer Menge zugesetzt ist, die einen S-Wert von kleiner 10.000, vorzugsweise kleiner 5.000, ergibt, **dass** auf einer ersten Seite der Siegelfolie (10) die Oberflächenstrukturen (14) ausgebildet sind und eine gegenüberliegende zweite Seite der Siegelfolie (10) mit der Trägerschicht (18) des Folienlaminats (16) verbunden ist **und dass** beim Siegeln aneinander liegende Folienlaminate (16) mit der Siegelfolie (10), insbesondere im Überlappungsbereich mehrerer Siegelnähte (2, 3), zusammengepresst und komprimiert werden, um die Ausbildung von Luftkanälen (4) im Überlappungsbereich zu vermeiden.

2. Beutelverpackung nach Anspruch 1, **dadurch gekennzeichnet, dass** die Siegelfolie (10) ohne Zugabe von Slipadditiv gefertigt ist.

3. Beutelverpackung nach Anspruch 1 oder 2, **dadurch gekennzeichnet, dass** die größte Dicke (h₂) der Siegelfolie (10) um maximal 300% größer ist, als die kleinste Dicke (h₁) der Siegelfolie (10).

4. Beutelverpackung nach Anspruch 1 oder 2, **dadurch gekennzeichnet, dass** die größte seitliche Erstreckung (b₁, b₂) der Oberflächenstrukturen (14) kleiner als 400 µm, vorzugsweise kleiner als 250 µm, ist.

5. Beutelverpackung nach einem dem Ansprüche 1 bis 4, **dadurch gekennzeichnet, dass** die Oberflächenstrukturen (14) diagonal zur Längsrichtung der Siegelfolie (10) ausgerichtet sind.

6. Beutelverpackung nach einem dem Ansprüche 1 bis 5, **dadurch gekennzeichnet, dass** die Oberflächenstrukturen (14) aus der ersten Seite (15) der Siegelfolie (10) herausragend ausgebildet sind.

7. Beutelverpackung nach einem dem Ansprüche 1 bis 5, **dadurch gekennzeichnet, dass** die Oberflächenstrukturen (14) als Vertiefungen an der ersten Seite (15) der Siegelfolie (15) ausgebildet sind.

8. Beutelverpackung nach einem dem Ansprüche 1 bis 7, **dadurch gekennzeichnet, dass** die Oberflächenstrukturen (14) mit einer hexagonalen Grundfläche ausgebildet sind.

9. Beutelverpackung nach einem dem Ansprüche 1 bis 8, **dadurch gekennzeichnet, dass** die Siegelfolie (10) eine, vorzugsweise im Flachfolienextrusionsverfahren oder Blasfolienextrusionsverfahren hergestellte, Polyolefin-Folie, vorzugsweise eine Polyethylen-Folie oder Polypropylen-Folie, ist.

10. Beutelverpackung nach einem dem Ansprüche 1 bis 9, **dadurch gekennzeichnet, dass** die Siegelfolie (10) frei von Antiblockadditiven ist.

11. Beutelverpackung nach einem der Ansprüche 1 bis 10, **dadurch gekennzeichnet, dass** die Siegelschicht (11) eine mittlere Schichtdicke im Bereich von 10µm bis 100µm, vorzugsweise 10 µm bis 80 µm und ganz besonders vorzugsweise im Bereich von 20 µm bis 70 µm, aufweist.

12. Beutelverpackung nach einem der Ansprüche 1 bis 11, **dadurch gekennzeichnet, dass** die Trägerschicht (18) eine Basisschicht (12) umfasst.

13. Beutelverpackung nach einem der Ansprüche 1 bis 11, **dadurch gekennzeichnet, dass** die Trägerschicht (18) eine Basisschicht (12) und eine Barriereschicht (13) umfasst, wobei die Barriereschicht zwischen Basisschicht (12) und der Siegelschicht (11) angeordnet ist.

## Claims

1. A bag packaging, produced from a film laminate (16) comprising a carrier layer (18) and a sealing film (10) forming a sealing layer (11), the bag packaging being produced by folding and sealing the film laminate (16), whereby overlapping sealed seams (2, 3) are created, **characterized in that** the sealing film (10) comprises a sealable polymer having a layer thickness in the range of 10 µm to 100 µm, preferably 10 µm to 80 µm, and especially particularly preferably in the range of 20 µm to 70 µm, wherein surface structures (14) being incorporated on a first side (15) of the sealing film (10) at least in areas where sealing takes place, wherein the largest thickness (h₂) of the sealing film (10) being at least 10% greater than the smallest thickness (h₁) of the sealing film (10) and the largest lateral extension (b₁, b₂) of the surface structures (14) being smaller than 500 µm, and a slip additive being added to the sealing film (10) in an amount that yields an S-value of less than 10,000, and preferably less than 5,000, **in that** the surface structures (14) are formed on a first side of the sealing film (10) and an opposite second side of the sealing film (10) is joined to the carrier layer (18) of the film laminate (16), **and in that** during sealing, adjoining film laminates (16) with the sealing film (10) are pressed together and compressed, in particular in the overlapping region of multiple sealed seams (2, 3), so as to avoid the formation of air channels (4) in the overlapping region.

2. The bag packaging according to claim 1, **characterized in that** the sealing film (10) is produced without adding slip additive.

3. The bag packaging according to claim 1 or 2, **characterized in that** the largest thickness (h₂) of the sealing film (10) is no more than 300% greater than the smallest thickness (h₁) of the sealing film (10).

4. The bag packaging according to claim 1 or 2, **characterized in that** the largest lateral extension (b₁, b₂) of the surface structures (14) is smaller than 400 µm, and preferably smaller than 250 µm.

5. The bag packaging according to any one of claims 1 to 4, **characterized in that** the surface structures (14) are oriented diagonally to the longitudinal direction of the sealing film (10).

6. The bag packaging according to any one of claims 1 to 5, **characterized in that** the surface structures (14) protrude from the first side (15) of the sealing film (10).

7. The bag packaging according to any one of claims 1 to 5, **characterized in that** the surface structures (14) are formed as depressions on the first side (15) of the sealing film (10).

8. The bag packaging according to any one of claims 1 to 7, **characterized in that** the surface structures (14) have a hexagonal base surface area.

9. The bag packaging according to any one of claims 1 to 8, **characterized in that** the sealing film (10) is a polyolefin film, and preferably a polyethylene film or a polypropylene film, preferably produced by way of the flat film extrusion process or the blown film extrusion process.

10. The bag packaging according to any one of claims 1 to 9, **characterized in that** the sealing film (10) is free of antiblock additives.

11. The bag packaging according to claim 1 to 10, **characterized in that** the sealing layer (11) has an average layer thickness in the range of 10 µm to 100 µm, preferably 10 µm to 80 µm, and especially particularly preferably in the range of 20 µm to 70 µm.

12. The bag packaging according to any one of claims 1 to 11, **characterized in that** the carrier layer (18) comprises a base layer (12).

13. The bag packaging according to any one of claims 1 to 11, **characterized in that** the carrier layer (18) comprises a base layer (12) and a barrier layer (13), wherein the barrier layer is arranged between the base layer (12) and the sealing layer (11).

## Revendications

1. Emballage en sachet réalisé à partir d'un stratifié de film (16) constitué d'une couche de support (18) et d'un film de scellement (10) formant une couche de scellement (11), l'emballage en sachet étant obtenu par le pliage et le scellement du stratifié de film (16), de sorte que des cordons de scellement (2, 3) chevauchants se forment, **caractérisé en ce que** le film de scellement (10) est constitué d'un polymère pouvant être scellé ayant une épaisseur de couche comprise entre 10 et 100 µm, de préférence entre 10 et 80 µm et de manière tout particulièrement préférée entre 20 et 70 µm, des structures de surface (14) étant incorporées sur un premier côté (15) du film de scellement (10) au moins aux points où le scellement est effectué, la plus grande épaisseur (h₂) du film de scellement (10) dépassant la plus petite épaisseur (h₁) du film de scellement (10) d'au moins 10 % et la plus grande extension latérale (b₁, b₂) des structures de surface (14) étant inférieure à 500 µm et un additif de glissement étant ajouté au film de scellement (10) en une quantité qui donne une valeur S inférieure à 10 000, de préférence inférieure à 5 000, **en ce que** les structures de surface (14) sont réalisées sur un premier côté du film de scellement (10) et un second côté opposé du film de scellement (10) est relié à la couche de support (18) du stratifié de film (16) **et en ce que,** lors du scellement, des stratifiés de film (16) juxtaposés sont pressés ensemble et comprimés à l'aide du film de scellement (10), en particulier dans la zone chevauchante de plusieurs cordons de scellement (2, 3), afin d'éviter la formation de conduits d'air (4) dans la zone de chevauchement.

2. Emballage en sachet selon la revendication 1, **caractérisé en ce que** le film de scellement (10) est réalisé sans ajout d'additif de glissement.

3. Emballage en sachet selon la revendication 1 ou 2, **caractérisé en ce que** la plus grande épaisseur (h₂) du film de scellement (10) dépasse la plus petite épaisseur (h₁) du film de scellement (10) de 300 % au maximum.

4. Emballage en sachet selon la revendication 1 ou 2, **caractérisé en ce que** la plus grande extension latérale (b₁, b₂) des structures de surface (14) est inférieure à 400 µm, de préférence inférieure à 250 µm.

5. Emballage en sachet selon l'une des revendications 1 à 4, **caractérisé en ce que** les structures de surface (14) sont orientées en diagonale par rapport à la direction longitudinale du film de scellement (10).

6. Emballage en sachet selon l'une des revendications 1 à 5, **caractérisé en ce que** les structures de surface (14) du premier côté (15) du film de scellement (10) sont réalisées en saillie.

7. Emballage en sachet selon l'une des revendications 1 à 5, **caractérisé en ce que** les structures de surface (14) sont réalisées sous forme de creux sur le premier côté (15) du film de scellement (15).

8. Emballage en sachet selon l'une quelconque des revendications 1 à 7, **caractérisé en ce que** les structures de surface (14) comportent une surface de base hexagonale.

9. Sachet selon l'une des revendications 1 à 8, **caractérisé en ce que** le film de scellement (10) est un film de polyoléfine, de préférence un film de polyéthylène ou de polypropylène, de préférence réalisé par un procédé d'extrusion de film plat ou d'extrusion de film soufflé.

10. Emballage en sachet selon l'une des revendications 1 à 9, **caractérisé en ce que** le film de scellement (10) est exempt d'additifs antiblocage.

11. Emballage en sachet selon l'une des revendications 1 à 10, **caractérisé en ce que** la couche de scellement (11) a une épaisseur de couche moyenne comprise entre 10 et 100 µm, de préférence entre 10 et 80 µm et de manière tout particulièrement préférée entre 20 et 70 µm.

12. Emballage en sachet selon l'une des revendications 1 à 11, **caractérisé en ce que** la couche de support (18) comprend une couche de base (12).

13. Emballage en sachet selon l'une des revendications 1 à 11, **caractérisé en ce que** la couche de support (18) comprend une couche de base (12) et une couche formant barrière (13), la couche formant barrière étant disposée entre la couche de base (12) et la couche de scellement (11).
